Europäisches Patentamt

**European Patent Office**

**Office européen des brevets**

(11) Veröffentlichungsnummer: **0 415 322 A2**

# EUROPÄISCHE PATENTANMELDUNG

(21) Anmeldenummer: **90116391.5**

(22) Anmeldetag: **24.08.90**

(51) Int. Cl.5: **B07B 7/00**

(30) Priorität: **26.08.89 DE 3928292**

(43) Veröffentlichungstag der Anmeldung:
**06.03.91 Patentblatt 91/10**

(84) Benannte Vertragsstaaten:
**AT BE CH DE DK ES FR GB GR IT LI LU NL SE**

(71) Anmelder: **Nied, Roland, Dr.-Ing.**
**Raiffeisenstrasse 10**
**W-8901 Bonstetten(DE)**

(72) Erfinder: **Nied, Roland, Dr.-Ing.**
**Raiffeisenstrasse 10**
**W-8901 Bonstetten(DE)**

(74) Vertreter: **Walter, Helmut, Dipl.-Ing.**
**Aubinger Strasse 81**
**W-8000 München 60(DE)**

(54) **Verschleissanzeige.**

(57) Gegenstand der Erfindung ist die Verhinderung des Verschleißes von Flächen, die dem Einfluß hochenergiebeladener Partikel ausgesetzt sind, wobei der verschleißgefährdeten Fläche ein Verschleißkörper vorgelagert ist, dem ein Sensor eines elektrischen Stromkreises mit einer Anzeige zugeordnet ist. Gegenstand der Erfindung ist ferner die Anwendung insbesondere bei Windrichtern, wobei der Verschleißkörper mit Anzeige dem Feingutauslaßrohr zugeordnet ist. Gegenstand der Erfindung ist auch eine Vorrichtung, mit der in einfacher Weise ein Spalt zwischen dem Feingutauslaßrohr und dem Sichtrad bestimmt werden kann.

EP 0 415 322 A2

## VERSCHLEISSANZEIGE

Die Erfindung befaßt sich ganz allgemein mit dem Problem, wie eine dem Verschleiß von Haus aus ausgesetzte Fläche von solchem Verschleiß freigehalten werden kann. Unter diesem sehr generellen Gesichtspunkt ist als dem Verschleiß ausgesetzte Fläche jede entsprechende Fläche zu verstehen, und als dem Verschleiß auslösendes Moment ist jeder Gegenstand zu verstehen, der mit angemessener Energie auf die vorerwähnte Fläche einwirkt. Unter diesem Gesichtspunkt wird als dem Kern der Erfindung relativ entfernt liegende Paarung eine bewegte Fläche und ein die Bewegung dieser Fläche bremsender Gegenstand verstanden. Die bewegte Fläche soll bei bestimmten Betriebszuständen zum Stillstand gebracht oder zu einer Bewegung mit geringerer Geschwindigkeit verzögert werden, wozu eine Bremse veranlaßt wird, mit der bewegten Fläche zusammenzuwirken, und auch in der modernen Technik arbeiten häufig bewegte Fläche und Bremse rein mechanisch zusammen. Hierbei ist mechanischer Verschleiß unvermeidbar, und es ist seit langem üblich, Bremsklötzen und dgl. einen Bremsbelag zuzuordnen, die so ausgelegt sind, daß eine optimale Bremswirkung aufgebracht wird und der Verschleiß zu einer gezielten Zerstörung des Bremsbelages führt, der den Bremsklötzen und dgl. leicht auswechselbar zugeordnet ist, um bei Erreichen eines bestimmten Ausmaßes des Abriebes durch neue Beläge ersetzt zu werden. Bremse und zu bremsende Fläche werden so vor Zerstörung weitgehend bewahrt. Insoweit ist es Aufgabe der Erfindung, einen bestimmten Verschleißzustand der Bremsbeläge in ein wahrnehmbares Signal umzusetzen, um einen Betrieb der Bremse bei schon zerstörtem Bremsbelag verhindern zu können.

Im besonderen befaßt sich die Erfindung mit der Sichtertechnik. Hierbei sind Techniken bekannt, gemäß denen ein mit Feststoffpartikeln unterschiedlicher Masse versetzter Gasstrom zur Rotation gebracht wird. Unter dem Einfluß der Fliehkraft werden die Partikel unterschiedlich weit nach außen getragen, so daß sich Schichten ausbilden, innerhalb deren Partikel gleicher Masse versammelt sind, sich die Schichten aber bezüglich der Partikelmasse voneinander unterscheiden. Bezüglich des Verschleißes spielt dabei das Feingutaustrittsrohr von Windsichern eine besondere Rolle, das aufgrund gegebener Umstände in besonderem Maße dem Verschleiß ausgesetzt ist, dessen Verschleiß jedoch bisher kaum beobachtet bzw. erst dann festgestellt werden konnte, wenn er bereits zur Zerstörung des Rohres geführt hatte. Insoweit ist es Aufgabe der Erfindung, das Feinguttrittsrohr von Windsichtern zuverlässig gegen die Zerstörung infolge Verschleiß zu schützen.

Die wesentlichen Merkmale der Erfindung zur Lösung der Aufgabe, die sich aus den vorstehenden Ausführungen ergibt, sind Gegenstand der Ansprüche. Erläutert wird die Erfindung nachfolgend und anhand der Zeichnung am Feingutauslaß eines Windsichters als bevorzugter erfindungsgemäßer Ausbildung einer vor Verschleiß zu schützenden Vorrichtung, die über das Problem der Verschleißvermeidung hinaus in besonderer Weise erfinderisch ausgebildet ist, um im einzelnen angegebene Vorteile zu haben, wozu insbesondere die Feineinstellung eines gewollten und notwendigen Spaltes gehört.

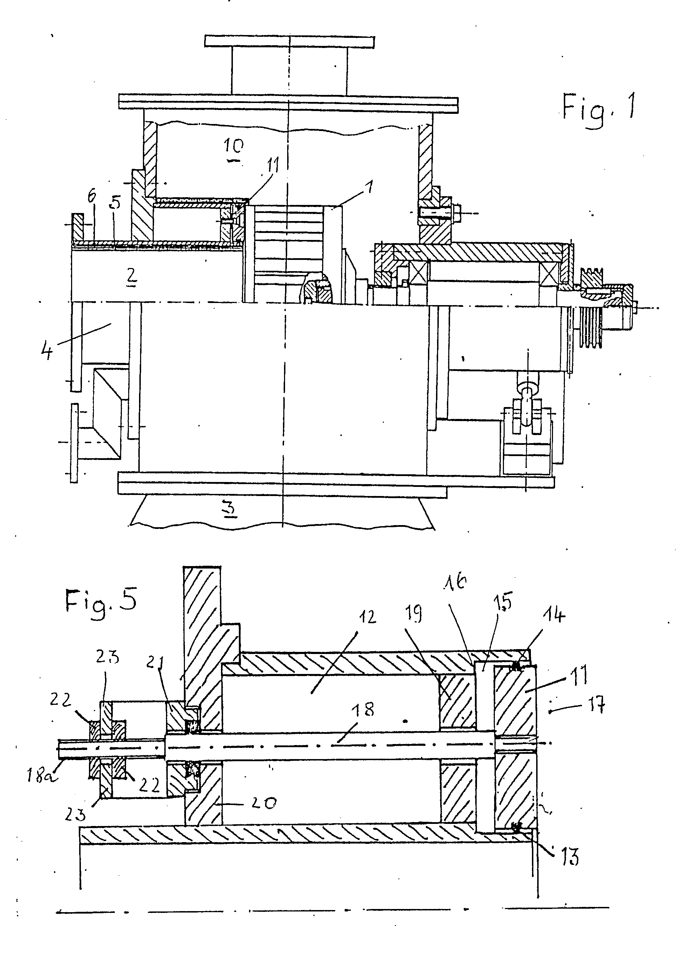

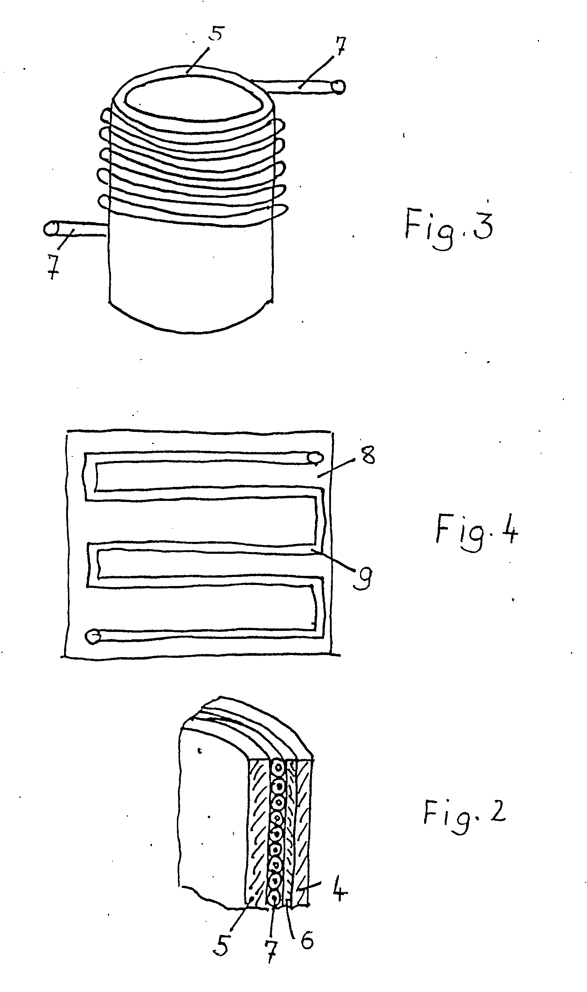

In Fig.1 ist ein Windsichter, teilweise im Schnitt, dargestellt, der im Zusammenhang mit der Erfindung als an sich in üblicher Weise ausgebildet und arbeitend zu unterstellen ist. Die Sichtung erfolgt mit Hilfe eines drehbar gelagerten Sichtrades, das von dem mit Feingut durchsetzten Gasstrom durchströmt wird, wobei eine Gutanreicherung in einem Teil dieses Gasstromes erfolgt, der den Sichter durch den Feingutauslaß 2 verläßt, um in einem Filter, in ebenfalls bekannter Weise, gereinigt zu werden. Der Feingutauslaß ist ein an das Sichtergehäuse 3 angesetztes Rohr 4, das der Gefahr unterliegt, daß es von Feingutpartikeln beschädigt oder gar zerstört wird, weil die Feingutpartikel zwar eine geringe Masse, aber eine hohe Energie haben. Mit dieser hohen Energie können Feingutpartikel auf die Rohrwand auftreffen und zur Beschädigung dieser Rohrwand führen, was erfindungsgemäß verhindert werden soll. Deshalb ist die Rohrwand auf der Innenseite mit einer Verschleißschicht 5 versehen, wobei zwischen Rohrwand und Verschleißschicht 5 eine Zwischenschicht 6 angeordnet ist, die in sich elastisch und elektrisch nicht leitend sein soll und demzufolge vorzugsweise aus Gummi besteht (Fig.2). Die Verschleißschicht 5 ist von dem Leiter 7 eines elektrischen Stromkreises umgeben, der in einfachster Weise eine Spule aus einem isolierten, elektrisch leitenden Draht ist (Fig.3), der spulenförmig um den Verschleißkörper gewickelt ist und an seinen Enden Anschlüsse zum übrigen Teil des Schaltkreises aufweist.

Die Verschleißschicht 5 schützt zunächst einmal durch die Beschaffenheit ihres Materiales die Wand des Feingutaustrittsrohres gegen Beschädigung durch die im Feingasstrom befindlichen Partikel. Unterstützt wird dies durch die Elastizität der Zwischenschicht 6, die Ausweichbewegungen der Verschleißschicht bis zu einem tolerierbaren Maße zuläßt. Trifft ein besonders energiereiches Partikel auf die Verschleißschicht, und ist diese vielleicht auch schon durch eine entsprechend lange Einsatzzeit dünner als ursprünglich geworden, so kann es vorkommen, daß das Partikel die Verschleißschicht 5 durchschlägt. Durch entsprechende Ausbildung der Wicklung 7 ist die Wahrscheinlichkeit groß, daß dieses Partikel auf einen Wicklungsabschnitt des Leiters trifft und dessen Isolierung durchschlägt und auch noch den Drahtleiter durchtrennt. Dadurch wird ein bis dahin in der Wicklung aufrechterhaltener Stromfluß unterbrochen, und diese Unterbrechung muss lediglich in geeigneter Weise angezeigt werden, insbesondere optisch oder akustisch, so daß das Überwachungspersonal davon unterrichtet wird, daß die Verschleißschicht schadhaft geworden ist und ausgewechselt, ergänzt oder ausgebessert werden muß.

Statt einen Leiter anzuwenden, der zu einer um die Verschleißschicht 5 gewickelten Spule ausgebildet ist, kann ein flexibles Bahnmaterial 8 vorgesehen werden, das isolierend ist und in das eine ebenfalls flexible, elektrisch leitfähige Leiterbahn 9 inkorporiert ist (Fig.4). Die Leiterbahn 9 kann beispielsweise im Siebdruckverfahren auf die Seite des Bahnmateriales aufgebracht werden, die die Innenseite ist, wenn das Bahnmaterial zu einer Manschette um die Verschleißschicht 5 gelegt ist.

Um gewährleisten zu können, daß in den Auslaß keine Partikel gelangen, die außerhalb eines Spektrums liegen, dem Schutzschicht und signalgebende Wicklung angepaßt sind und zur Vermeidung einer Gegenströmung, wird zwischen dem Druck im Auslaß des Sichters und dem Druck in der Sichtradkammer 10 eine gewählte Druckdifferenz aufrechterhalten, wozu ein Ringspalt zwischen dem Auslaßrohr und der Sichtradkammer 10 definiert wird. Die Definition dieses Ringspaltes erfolgt mit einer Scheibe 11, die gegenüber dem Sichtrad in dessen Achsrichtung verstellbar ist und hierzu als Ringscheibe in einer ringförmigen Kammer 12 verstellbar ist, die das Auslaßrohr 4 konzentrisch umgibt. Aufgabe der Erfindung ist es insoweit, die Spaltbreite mit geringem Aufwand und von außen bestimmen zu können, auch wenn die Vorrichtung zusammengebaut und insbesondere das Sichtrad eingebaut ist.

Hierzu ist die Scheibe am inneren Rand mit einer Ringdichtung 13 und am äußeren Rand mit einer Ringdichtung 14 an den Wänden eines Abschnittes 15 der Kammer 12 geführt, der in einem Bund 16 gegenüber dem anderen Teil der Ringkammer 12 abgesetzt ist und den Bereich markiert, in dem die Ringscheibe 11 verstellbar ist und den an die Stirnseite der Ringscheibe anschließenden Spalt 17 zwischen Ringscheibe und Sichtrad auf unterschiedlichen Weiten festlegen zu können. Auf den Umfang der Ringscheibe gleichmäßig verteilt, sind in diese mehrere Bolzen 18 fest eingesetzt. Sie sind durch eine der Ringscheibe nahe Wand 19 der Ringkammer 12 verstellbar hindurchgeführt sowie durch die Ringkammer 12 selbst und schließlich durch eine der Ringscheibe 11 entfernte Wand 20, wobei zwischen der Wand 20 und den Bolzen 18 jeweils eine weitere Dichtung 21 angeordnet ist. Das außerhalb der Wand 20 liegende Ende 18a des jeweiligen Bolzens 18 ist mit einem als Feingewinde ausgeführten Außengewinde versehen, mit dem der jeweilige Bolzen durch ein Mutternpaar 22 hindurchgeführt ist, dessen Muttern in einem Haltebügel 23 an der Wand 20 in einem vorgegebenen Abstand gehalten sind. Die Muttern sind drehbar gelagert, und durch Drehen der Muttern kann der jeweilige Bolzen 18 axial verstellt werden, und durch axiale Verstellung der Bolzen 18 kann die Ringscheibe 11 verstellt und damit der Spalt 17 auf einfache Weise und von außen bestimmt werden.,

Im gegebenen Fall wird es zweckmäßig sein, den Einstellring in der Form der vorerwähnten Ringscheibe 11 in der Weise gestellbar zu machen, daß das dem Einstellring 11 zugehörige Ende des jeweiligen Bolzens 18 mit der Ringscheibe 11 drehbar, aber axial unverstellbar verbunden ist und den Bolzen axial verstellbar und drehbar durch die Wände 19, 20 sowie die Dichtung 21 und die unverstellbaren und unverdrehbaren Muttern 22 hindurchzuführen, so, daß die Ringscheibe bzw. der Einstellring 11 dadurch axial verstellt werden kann, daß an das "äußere" Ende 18a des jeweiligen Bolzens 18 ein Werkzeug angesetzt werden kann, um den Bolzen um seine Längsachse zu drehen und durch das Zusammenwirken mit den ortsfesten Muttern 22 in Richtung seiner Längsachse zu verstellen.

In Fig.1 ist die Ringscheibe zw. der Einstellring in seiner Zuordnung zum Sichter, in Fig.5 in seiner erfindungsgemäßen Verstellbarkeit dargestellt.

## Ansprüche

1. Vorrichtung zur Verhinderung des Verschleisses von Flächen, die dem Einfluß hochenergiebeladener Partikel ausgesetzt sind, **dadurch gekennzeichnet**, daß der verschleißgefährdeten Fläche ein Verschleißkörper vorgelagert ist, dem ein Sensor eines elektrischen Stromkreises mit einer Anzeige zugeordnet ist.

2. Vorrichtung nach Anspruch 1, **dadurch gekennzeichnet**, daß der Sensor band- oder fadenförmig ausgebildet und in im wesentlichen gleichmäßiger Verteilung der der Verschleißursache zugekehrten Seite des Verschleißkörpers zugeordnet und hinter dieser Fläche angeordnet ist.

3. Vorrichtung nach Anspruch 2, **dadurch gekennzeichnet**, daß der Sensor zwischen dem Verschleißkörper und dem vom Verschleiß freizuhaltenden Fläche angeordnet ist.

4. Vorrichtung nach einem der Ansprilche 1 bis 3,**dadurch gekennzeichnet,** daß der Sensor eine elektrische Leiterbahn mit flach rechteckigem Querschnitt ist.

5. Vorrichtung nach einem der Ansprilche 1 bis 3, vorzugsweise Anspruch 3,**dadurch gekennzeichnet,** daß die vom Verschleiß freizuhaltende Fläche zylindrisch ist, der Verschleißkörper ein gleichachsig innerhalb der vom Verschleiß freizuhaltenden Fläche angeordnet ist und einen Arbeitsraum umschließt und der Sensor eine elektrische Spule zwischen Verschleißkörper und vom Verschleiß freizuhaltender Fläche ist.

6. Vorrichtung nach Anspruch 5, **dadurch gekennzeichnet,** daß der Arbeitsraum Teil eines Windsichters ist.

7. Vorrichtung nach Anspruch 6, **dadurch gekennzeichnet,** daß der Arbeitsraum des Windsichters das Feingutaustrittsrohr ist.

8. Vorrichtung nach Anspruch 7,**dadurch gekennzeichnet,** daß das Feingutaustrittsrohr mit seiner Innenseite den Verschleißkörper aufnimmt, wobei zwischen der Rohrinnenseite und dem zylinderförmigen Verschleißkörper der als Spule ausgebildete Fühler angeordnet ist und daß das Feingutaustrittsrohr mit seiner Außenseite die zylindrische Innenwand einer das Feingutaustrittsrohr konzentrisch umgebenden Überdruckkammer ist, die über einen definierten Spalt mit der Sichterradkammer in Verbindung steht.

9.Vorrichtung nach Anspruch 8,**dadurch gekennzeichnet,** daß die Überdruckkammer auf der der Sichterradkammer zugekehrten Seite von einer Wand begrenzt wird, die gegenüber dem Sichterrad verstellbar ist und zwar von stangenförmigen Verstellelementen, die parallel zu der Längsachse des Feingutaustrittsrohres verlaufen, am einen Ende die verstellbare Wand tragen und mit ihren anderen Enden längsverstellbar durch eine Gegenwand geführt sind.

Fig. 1

Fig. 5

Fig. 3

Fig. 4

Fig. 2